(19) **Europäisches Patentamt / European Patent Office / Office européen des brevets**

(11) **EP 1 543 304 B1**

(12) **FASCICULE DE BREVET EUROPEEN**

(45) Date de publication et mention
de la délivrance du brevet:
**08.09.2010 Bulletin 2010/36**

(51) Int Cl.:
***G01K 17/20*** (2006.01)    ***G01K 17/00*** (2006.01)
***G01F 23/24*** (2006.01)

(21) Numéro de dépôt: **03760014.5**

(22) Date de dépôt: **11.06.2003**

(86) Numéro de dépôt international:
**PCT/FR2003/001757**

(87) Numéro de publication internationale:
**WO 2003/106950 (24.12.2003 Gazette 2003/52)**

(54) **METHODE METTANT EN OEUVRE DES CAPTEURS DE FLUX THERMIQUE POUR EVALUER LA PUISSANCE D'UNE REACTION THERMIQUE A L'INTERIEUR D'UNE ENCEINTE, ET DISPOSITIF POUR LA MISE EN OEUVRE D'UNE TELLE METHODE**

VERFAHREN MIT WÄRMEFLUSSSENSOREN ZUR BESTIMMUNG DER AUSGABE EINER THERMISCHEN REAKTION IN EINEM GEHÄUSE UND EINRICHTUNG ZUR AUSFÜHRUNG EINES SOLCHEN VERFAHRENS

METHOD USING THERMAL FLUX SENSORS TO DETERMINE THE OUTPUT OF A THERMAL REACTION WITHIN A HOUSING AND DEVICE FOR CARRYING OUT SUCH A METHOD

(84) Etats contractants désignés:
**AT BE BG CH CY CZ DE DK EE ES FI FR GB GR HU IE IT LI LU MC NL PT RO SE SI SK TR**

(30) Priorité: **12.06.2002 FR 0208069**

(43) Date de publication de la demande:
**22.06.2005 Bulletin 2005/25**

(73) Titulaire: **Mettler-Toledo AG
8606 Greifensee (CH)**

(72) Inventeurs:
• **ESPRIMONT, Eric Alain
91430 Igny (FR)**

• **ESPOSITO, Thomas Antonio
75005 Paris (FR)**

(74) Mandataire: **Schilling, Doris
Mettler-Toledo International Inc.
Greifensee Branch - Patent Department
Im Langacher
P.O. Box MT-100
8606 Greifensee (CH)**

(56) Documents cités:
**EP-A- 0 275 042    US-A- 4 741 209
US-A- 5 174 655**

## Description

L'invention est du domaine de la métrologie et plus particulièrement du domaine de la mesure des quantités de chaleur. Elle a pour objet une méthode pour évaluer la puissance d'une réaction thermique à l'intérieur d'une enceinte, telle que celle d'un réacteur d'un calorimètre. Elle a aussi pour objet un dispositif pour la mise en oeuvre d'une telle méthode.

On rappelle qu'il est courant d'évaluer et d'analyser des réactions thermiques produites à l'intérieur d'une enceinte. Ces réactions thermiques sont par exemple produites par des réactions chimiques d'un réactif, ou par la chaleur dégagée par des réactions biologiques, telles que celles résultant de l'activité de microorganismes, ou encore par des réactions physiques, telles que celles résultant de la cristallisation ou de la transition de forme de substances polymorphiques, ou enfin par des productions volontaires d'énergie, telles que des réactions nucléaires.

Plus particulièrement dans le cadre d'un calorimètre, l'enceinte est placée dans un milieu thermiquement contrôlé, pour maintenir à température désirée un réactif contenu à l'intérieur de l'enceinte. Ce réactif est maintenu en agitation, par l'intermédiaire d'un organe agitateur ou par mise en mouvement de l'enceinte elle-même. Les moyens de maintien à température désirée sont par exemple obtenus au moyen d'une enveloppe entourant l'enceinte pour la circulation d'un fluide caloporteur thermostaté.

L'évolution et l'analyse de la réaction thermique à l'intérieur de l'enceinte, vise plus particulièrement à déterminer sa puissance et le coefficient d'échange thermique entre la paroi de l'enceinte et le réactif.

Une première technique connue consiste à mesurer les températures interne et externe de l'enceinte au moyen de thermomètres. La puissance de la réaction thermique prend en compte la différence entre les deux températures mesurées, la surface d'échange et le coefficient d'échange thermique entre le réactif et la paroi de l'enceinte. Selon cette technique, la surface d'échange est évaluée au jugé et le coefficient d'échange thermique est déterminé préalablement par calibration en plongeant dans le réactif une résistance électrique chauffante.

Un premier inconvénient de cette technique réside dans une prise en compte arbitraire de la surface d'échange que l'on estime au jugé selon le niveau du réactif à l'état de repos à l'intérieur de l'enceinte. Il en résulte une approximation préjudiciable pour la fiabilité et l'exactitude du résultat obtenu quant à la détermination de la puissance de la réaction thermique.

Un deuxième inconvénient réside dans l'utilisation inadéquate d'un moyen de chauffage du réactif préalablement à son agitation avec, soit des conséquences indésirables sur les caractéristiques physico-chimiques du réactif avant la réaction étudiée, soit l'étape préalable de détermination du coefficient par une opération spécifique de calibration.

Une deuxième technique connue consiste à utiliser une résistance chauffante placée dans le fluide caloporteur circulant entre l'enceinte et son enveloppe. Lorsque la réaction étudiée est exothermique, la résistance chauffante produit moins de chaleur pour maintenir constante la température du réactif. La puissance de la réaction est alors évaluée à partir de la diminution de puissance correspondante de la résistance chauffante. On pourra par exemple se reporter au brevet US4130016 (LYNN C. WALKER).

Un premier inconvénient majeur de cette technique est qu'elle est inapplicable aux réactions endothermiques.

Un deuxième inconvénient réside dans l'inertie thermique de l'enceinte à l'encontre d'une analyse possible de variations thermiques rapides et/ou d'amplitudes importantes.

Une troisième technique consiste à effectuer un bilan thermique dans la zone de circulation du fluide caloporteur. Pour cela, il est par exemple utilisé un condenseur dans lequel le fluide caloporteur se condense après chauffage. La mesure de la quantité de fluide condensé permet de déterminer la puissance de la réaction thermique. On pourra par exemple se reporter au brevet EP0275042 (WESTINGHOUSE ELECTRIC CORPORATION).

Un inconvénient de cette technique réside dans l'imprécision de l'analyse de la réaction thermique à l'intérieur de l'enceinte, évaluée par l'intermédiaire du fluide caloporteur, ce qui implique des approximations de mesure liées notamment aux pertes thermiques cumulées entre l'enceinte et les moyens utilisés pour effectuer le bilan thermique.

Par ailleurs et là encore, il en résulte une approximation préjudiciable pour la fiabilité et l'exactitude du résultat obtenu quant à la détermination de la puissance de la réaction thermique.

Le brevet US5174655 (WILFRIED LITZ & all) décrit un procédé pour la mesure d'un flux thermique sortant d'un réacteur en temps réel, utilisant une cellule extérieure au réacteur vers laquelle est pompée du réactif. La cellule est un calorimètre. La surface d'échange et le coefficient d'échange thermique entre l'enceinte du calorimètre et une enveloppe sont pris en compte à l'aide d'un seul coefficient K ("diathermancy") qui est calculé. Le réactif est en contact avec l'ensemble de la surface de l'enceinte, ce dont rend compte le coefficient K.

Le but global de la présente invention est de proposer une méthode pour évaluer en continu, en temps réel, de manière fiable et précise, la puissance d'une réaction thermique à l'intérieur d'une enceinte et le coefficient d'échange thermique entre le réactif et cette enceinte. Elle a aussi pour but de proposer un dispositif pour mettre en oeuvre cette méthode.

De manière générale, la démarche inventive de la présente invention a consisté à proposer une méthode et son dispositif de mise en oeuvre pour déterminer de manière précise et fiable, en temps réel et en continu, la surface d'échange entre le réactif et l'enceinte, pour finalement permettre d'analyser dans les mêmes conditions les caractéristiques de l'enceinte et de la réaction thermique étudiée.

Cette démarche a plus particulièrement consisté à rompre les habitudes prises dans le domaine, et à utiliser des capteurs de flux de chaleur pour déterminer de manière précise, fiable, en continu et en temps réel, la surface d'échange entre le réactif et l'enceinte.

Il résulte de cette démarche qu'à partir de l'utilisation de moyens simples, constitués de capteurs de flux de chaleur, il est rendu possible d'analyser une réaction thermique, tant endothermique qu'exothermique, et des réactions au cours desquelles les propriétés physicochimiques des réactifs sont susceptibles d'évoluer rapidement et/ou avec des amplitudes importantes.

En outre, il est rendu possible d'analyser, en continu et en temps réel, une réaction thermique à l'intérieur d'une enceinte avec des variations provoquées volontaires de la température du réactif, pour en étudier l'évolution.

Grâce à une telle exploitation inhabituelle des capteurs de flux de chaleur, tels que des thermopiles délivrant des informations logiques de tension, il est rendu possible d'obtenir des mesures fiables de flux de chaleur à travers la paroi de l'enceinte, permettant de calculer avec des moyens de calcul numériques automatisés de manière précise, en continu et en temps réel, en premier lieu le niveau du réactif à l'intérieur d'une enceinte, en deuxième lieu la surface d'échange entre le réactif et la paroi de l'enceinte, puis la puissance thermique transmise par l'enceinte et le coefficient d'échange thermique entre le réactif et la paroi de l'enceinte, et enfin la puissance et l'énergie de la réaction thermique.

On notera encore un résultat avantageux de l'invention qui réside dans l'absence d'étalonnage préalable, tel que selon l'art antérieur, des moyens mis en oeuvre pour la méthode de l'invention, à savoir les capteurs de mesure de flux de chaleur.

Au-delà de la calorimétrie, il est apparu un besoin qui réside dans la connaissance précise et fiable, en temps réel et en continu, du niveau d'un liquide contenu dans une enceinte, assimilable à un réactif du genre susvisé quant à son évolution thermique.

Un autre résultat atteint par la présente invention est de proposer une méthode et son dispositif de mise en oeuvre permettant de mesurer, entre deux instants donnés $t_0$ et $t_1$, la variation de distance, suite à une réaction thermique, prise entre deux points quelconques d'un réactif contenu dans une enceinte, à l'instant $t_0$ et $t_1$.

Des applications particulières de la mise en oeuvre de la méthode de l'invention consiste notamment à mesurer la variation spontanée du niveau réel h d'un réactif contenu dans une enceinte, notamment un seuil de sécurité, suite à des variations naturelles ou provoquées de l'environnement extérieur de cette enceinte, telle que cuve de stockage d'un produit sensible, ou encore la dilatométrie d'un matériau.

Selon la présente invention, il est proposé une méthode de détermination d'une surface d'échange A entre un réactif et la paroi d'une enceinte le contenant, en vue notamment de déterminer la puissance $P_r$ d'une réaction thermique à l'intérieur de l'enceinte et le coefficient d'échange thermique U entre le réactif et la paroi de l'enceinte.

Selon un premier aspect de l'invention, la méthode proposée consiste à mesurer un premier flux de chaleur $F_1$ par unité de surface pris dans une zone de la paroi en contact certain avec le réactif à mesurer un deuxième flux de chaleur $F_2$ par unité de surface pris dans une zone de la paroi en absence certaine de contact avec le réactif, à mesurer un troisième flux de chaleur $F_3$ par unité de surface pris dans une zone de la paroi comprenant en chevauchement continu à la fois une zone quelconque de la paroi en contact certain avec le réactif voisine d'une zone quelconque de la paroi en absence de contact certain avec le réactif, puis à calculer, par proportion entre les mesures effectuées des premier, deuxième et troisième flux de chaleur, le niveau réel h du réactif à l'intérieur de l'enceinte.

Ces dispositions sont telles qu'à partir du niveau réel h du réactif calculé et, relativement à une quelconque géométrie donnée de l'enceinte, la surface réelle d'échange A entre le réactif et la paroi de l'enceinte le contenant, peut être déterminer, en continu et en temps réel.

Selon un autre aspect de la méthode proposée par l'invention, la puissance $P_t$ transmise par l'enceinte peut être déterminée en mesurant le premier flux $F_1$ de chaleur par unité de surface et en déterminant ladite surface d'échange A entre le réactif et la paroi de l'enceinte, préférentiellement selon la méthode susvisée dans un premier aspect de l'invention.

Ces dispositions sont telles que la puissance transmise $P_t$ par l'enceinte peut être calculée en continu et en temps réel, avec une précision et une fiabilité préférentiellement obtenues à partir de celles de la surface d'échange A, à partir de la mesure du premier flux $F_1$ de chaleur par unité de surface ramenée à la totalité de la surface d'échange A entre le réactif et la paroi de l'enceinte.

A partir des données fiables recueillies par la méthode de l'invention, il est ensuite proposé dans une étape secondaire de déterminer le coefficient d'échange thermique U entre le réactif et la paroi de l'enceinte en mesurant la température $T_r$ du réactif et la température $T_e$ de la paroi de l'enceinte, en déterminant la surface réelle d'échange A entre le réactif et la paroi de l'enceinte, et en calculant la puissance $P_t$ transmise par l'enceinte.

Ces dispositions sont telles que le coefficient d'échange thermique U entre le réactif et la paroi de l'enceinte peut être calculé en continu et en temps réel, avec une précision et une fiabilité obtenues à partir de celles de la surface d'échange A., préférentiellement déterminée par la méthode générale de l'invention.

On comprendra que le coefficient d'échange thermique U entre le réactif et la paroi de l'enceinte est alors calculé à la manière connue de l'homme de l'art, à partir de la puissance transmise $P_t$ par l'enceinte, de la surface d'échange thermique A entre le réactif et la paroi de l'enceinte et de la différence de température entre la température du réactif et la température de la paroi de l'enceinte.

On notera cependant un résultat avantageux propre à la mise en oeuvre de la méthode de l'invention, qui réside dans la détermination directe du coefficient d'échange thermique entre le réactif et la paroi de l'enceinte, sans étape préalable susceptible de perturber le réactif.

Il résulte encore des dispositions de l'invention une observation en continu et en temps réel des modifications des propriétés physico-chimiques du réactif comme, par exemple, une augmentation de sa viscosité pendant la réaction thermique étudiée.

Il résulte enfin de ces dispositions la possibilité de simuler avec une très grande précision des réactions thermiques dans des réacteurs de plus grande taille.

A partir des données fiables recueillies par la méthode de l'invention, la puissance de la réaction $P_r$, est déterminée en mesurant l'évolution de la température du réactif au cours du temps de réaction, en déterminant la puissance transmise $P_t$ par l'enceinte et en évaluant les pertes thermiques de l'enceinte. Ces pertes thermiques, communément appelées « pertes de ciel de l'enceinte », sont des éléments connus de l'homme de l'art.

Ces dispositions sont telles que la puissance de la réaction $P_r$ puisse être calculée, en continu et en temps réel, avec une précision et une fiabilité obtenues à partir de celles de la surface d'échange A., préférentiellement déterminée par la méthode générale de l'invention.

On comprendra que la puissance $P_r$ de la réaction peut être calculée à la manière connue de l'homme de l'art, à partir de la masse et des caractéristiques physico-chimiques du réactif, de l'évolution de la température $T_r$ du réactif au cours du temps, de la puissance transmise $P_t$ par l'enceinte et des pertes thermiques de l'enceinte.

On comprendra aussi que l'on obtient l'énergie de la réaction, à la manière connue de l'homme de l'art, par intégration au cours du temps de la puissance de la réaction mesurée en continu tout au long de la réaction thermique.

Selon encore la présente invention au regard d'un dispositif pour la mise en oeuvre de la méthode proposée dans sa généralité, celui-ci comprend :

- une enceinte prévue pour recevoir le réactif,
- un premier capteur de flux de chaleur pour mesurer le premier flux de chaleur $F_1$ par unité de surface, ce capteur étant disposé sur la paroi extérieure de l'enceinte en une zone opposée à sa face interne, en contact certain avec le réactif,

- un deuxième capteur de flux de chaleur pour mesurer le deuxième flux de chaleur $F_2$ par unité de surface, ce capteur étant disposé sur la paroi extérieure de l'enceinte en une zone opposée à sa face interne, en absence certaine de contact avec le réactif,
- un troisième capteur de flux de chaleur pour mesurer le troisième flux de chaleur $F_3$ par unité de surface, ce capteur étant disposé sur la paroi extérieure de l'enceinte en une zone opposée à sa face interne à la fois en présence et en absence de contact avec le réactif .

Un tel dispositif comprend en outre et avantageusement des premiers moyens électroniques de calcul du niveau h du réactif à partir d'informations logiques de tension fournies par les premier, deuxième et troisième capteurs de flux, et des deuxièmes moyens électroniques de calcul de la surface réelle d'échange A entre le réactif et la paroi de l'enceinte, à partir d'informations logiques fournies par les premiers moyens électroniques et à partir des premiers moyens de mémoire des caractéristiques géométriques de l'enceinte préalablement saisies.

Selon une organisation particulière du dispositif de l'invention en calorimétrie, celui-ci comprend en outre une enveloppe entourant l'enceinte pour la circulation d'un fluide autour de cette dernière, ce fluide étant thermostaté par des moyens de production de chaleur, pour un maintien de l'enceinte à une température souhaitée.

Toujours selon cette organisation, le dispositif de l'invention comprend préférentiellement un premier capteur de température placé à l'intérieur de l'enceinte pour mesurer la température $T_r$ du réactif, et un deuxième capteur de température placé à l'intérieur de l'enveloppe pour mesurer la température $T_e$ de la paroi de l'enceinte, notamment obtenue à partir de la mesure de la température du fluide caloporteur à l'intérieur de l'enveloppe, à la manière connue de l'homme de l'art.

Selon une forme de réalisation préférée, le dispositif de l'invention comprend en outre des troisièmes moyens électroniques de calcul de la puissance $P_t$ transmise par l'enceinte et des quatrièmes moyens électroniques de calcul du coefficient d'échange thermique U entre le réactif et la paroi de l'enceinte, à partir des informations logiques en provenance des deuxièmes moyens électroniques de calcul, et à partir des informations logiques en provenance des premier et deuxième capteurs de température.

De préférence encore, le dispositif de l'invention comprend des cinquièmes moyens électroniques de calcul de la puissance $P_r$ de la réaction thermique à partir des informations logiques en provenance des troisièmes moyens électroniques de calcul et du premier capteur de température.

On notera aussi que les premiers, deuxièmes et troisièmes capteurs de flux de chaleur constituent avantageusement des moyens généraux de détermination en continu du niveau h d'un réactif à l'intérieur de l'enceinte, en association avec les premiers moyens de calcul.

On notera encore que les premiers, deuxièmes, troisièmes, quatrièmes et cinquièmes moyens de calcul électroniques sont avantageusement regroupés dans des moyens généraux de mémoires et de calculs électroniques.

On notera enfin que le dispositif de l'invention comprend notamment un calculateur comprenant des moyens généraux de mémoires et de calculs électroniques, des moyens d'affichage des différentes informations logiques mesurées et calculées, tels qu'écran, imprimante, ou analogues, et des moyens de saisie d'informations et de commande des moyens généraux de calcul, tels qu'un clavier ou analogues.

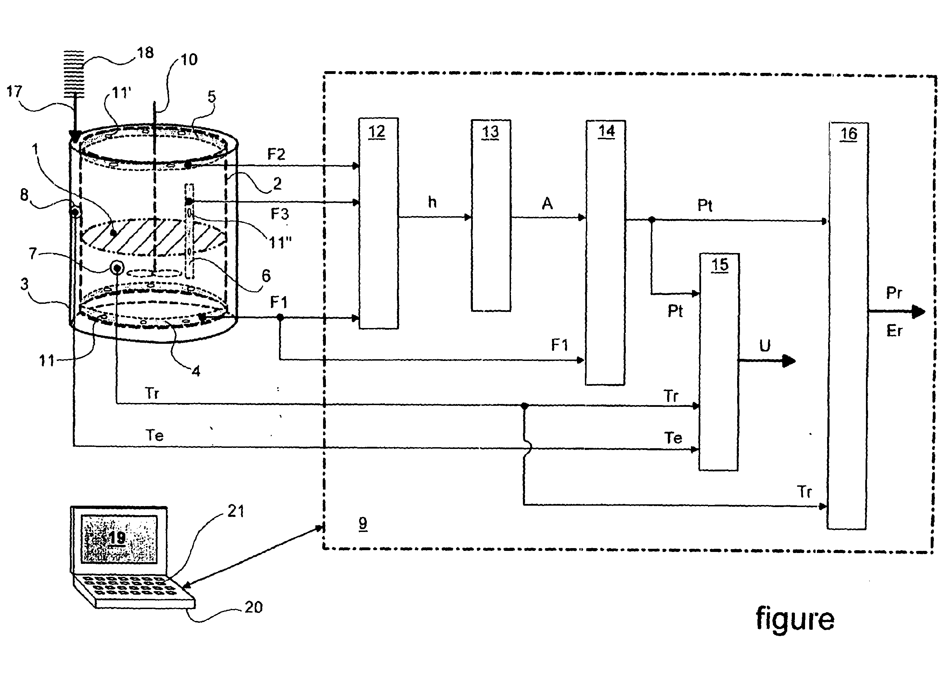

La présente invention sera mieux comprise et des détails en relevant apparaîtront, à la description qui va en être faite d'une forme préférée de réalisation, en relation avec la figure unique de la planche annexée, qui illustre schématiquement un exemple de réalisation d'un dispositif mettant en oeuvre une méthode globale de l'invention.

Sur la figure, un dispositif proposé par l'invention comprend dans sa globalité :

- un calorimètre, comprenant une enceinte 2, une enveloppe 3 disposée autour de cette enceinte 2 pour la circulation d'un fluide 17, et des moyens de production de chaleur 18 du fluide 17 pour maintenir le réactif à température désirée,
- des capteurs 4,5,6 de flux de chaleur équipant l'enceinte 2,
- des moyens généraux 9 de mémoires et de calculs électroniques,

Les capteurs 4,5,6 de flux susvisés sont notamment composés :

- d'un premier capteur 4 annulaire, placé en contact et autour de la face extérieure de la paroi de l'enceinte 2, à la base de cette dernière,
- d'un deuxième capteur 5 annulaire, placé en contact et autour de la face extérieure de la paroi de l'enceinte 2, au sommet de cette dernière,
- d'un troisième capteur 6 en bande, placé en contact et le long d'une génératrice de la face extérieure de la paroi de l'enceinte 2, de manière à chevaucher en continu des zones de cette dernière en correspondance avec des zones de la face interne de la paroi de l'enceinte 2 respectivement en contact et en absence de contact avec le réactif 1.

Par ailleurs, l'enceinte 2 est équipée d'un premier capteur de température 7 mesurant la température $T_r$ du réactif 1 et d'un deuxième capteur de température 8 mesurant la température $T_f$ du fluide contenu dans l'enveloppe 3, pour connaître la température $T_e$ de la paroi

de l'enceinte.

Chacun de ces capteurs de flux de chaleur 4,5,6 et de température 7,8 est relié aux moyens électroniques généraux de calcul 9.

On relèvera que l'enceinte 2 est notamment équipée de moyens pour agiter le réactif 1, selon des dispositions connues habituelles dans le domaine, tel qu'un agitateur 10, et de moyens de fixation 11, 11', 11" des capteurs de flux 4,5,6 sur sa paroi, mettant par exemple en oeuvre en association des ergots et des moyens élastiques.

Ce dispositif permet avantageusement :

- dans une première étape, de déterminer par des premiers moyens électroniques de calcul 12, le niveau réel h du réactif, à partir des flux de chaleur F1, F2, F3 mesurés respectivement par les premier, deuxième et troisième capteurs de flux. On relèvera que cette détermination est notamment obtenue à partir de la formule suivante :

$$F_3 = h.F_1 + (1-h). F_2$$

- dans une deuxième étape, de déterminer par des deuxièmes moyens électroniques de calcul 13, la surface d'échange A entre le réactif 1 et la paroi de l'enceinte 2. Pour une enceinte cylindrique, telle que représentée par exemple sur la figure, on obtient notamment cette détermination à partir de la formule suivante:

$$A = a + (2.\pi.R.c(F_3-F_2) / (F_1-F_2))$$

a : Surface d'échange de la base circulaire de l'enceinte (en m$^2$)
R : Rayon du cylindre formant l'enceinte (en m)
c : Hauteur totale du capteur de flux vertical (en m)

- dans une troisième étape, de déterminer par des troisièmes moyens électroniques de calcul 14, la puissance transmise $P_t$ par l'enceinte 2 à partir de la surface d'échange thermique A et du flux $F_1$. On relèvera que cette détermination est notamment obtenue à partir de la formule suivante :

$$P_t = A . F_1$$

- dans une quatrième étape, de déterminer par les quatrièmes moyens électroniques de calcul 15, le coefficient d'échange thermique U entre le réactif 1 et la paroi de l'enceinte 2 à partir de la puissance transmise par l'enceinte 2, de la température $T_r$ du réactif 1 et de la température $T_e$ du fluide caloporteur contenue dans l'enveloppe 3. On relèvera que cette détermination est notamment obtenue à partir de la formule suivante :

$$U = P_t / (A \cdot (T_r - T_e))$$

- dans une cinquième étape, de déterminer par les cinquièmes moyens électroniques de calcul 16, la puissance $P_r$ de la réaction thermique étudiée à partir de la puissance transmise $P_t$ par l'enceinte 2, de l'évolution de la température $T_r$ du réactif 1 au cours du temps, de la masse m du réactif, de la capacité calorifique $C_p$ du réactif 1 et des pertes thermiques de l'enceinte 2. On relèvera que cette détermination est notamment obtenue à partir de la formule suivante :

$$P_r = P_t + m \cdot C_p \cdot (dT_r/dt) + pertes$$

On obtient alors l'énergie de la réaction $E_r$ par intégration au cours du temps de la puissance de la réaction $P_r$.

On notera que le dispositif illustré comprend en outre un calculateur 20 comprenant des moyens généraux 9 de mémoires et de calculs électroniques, des moyens de visualisation tels qu'un écran 19, une imprimante et des moyens de saisie d'informations et de commande 21.

On relèvera aussi que les moyens généraux 9 de mémoires et de calculs électroniques sont organisés sous la forme d'un logiciel.

## Revendications

1. Méthode de détermination d'une surface d'échange A entre un réactif (1) et la paroi d'une enceinte (2) le contenant, en vue notamment de déterminer la puissance $P_r$ d'une réaction thermique à l'intérieur de l'enceinte (2) et le coefficient d'échange thermique U entre le réactif (1) et la paroi de l'enceinte (2), **caractérisée :**

   **en ce qu'**elle consiste :

   - à mesurer un premier flux de chaleur $F_1$ par unité de surface pris dans une zone de la paroi en contact certain avec le réactif (1),
   - à mesurer un deuxième flux de chaleur $F_2$ par unité de surface pris dans une zone de la paroi en absence certaine de contact avec le réactif (1),
   - à mesurer un troisième flux de chaleur $F_3$ par unité de surface pris dans une zone de la paroi comprenant en chevauchement continu à la fois une zone quelconque de la paroi en contact certain avec le réactif (1) voisine d'une zone quelconque de la paroi en absence de contact certain avec le réactif (1),
   - à calculer, par proportion entre les mesures effectuées des premier, deuxième et troisième flux de chaleur, le niveau réel h du réactif (1) à l'intérieur de l'enceinte (2),

   de telle sorte qu'à partir du niveau réel h du réactif (1) calculé et, relativement à une quelconque géométrie donnée de l'enceinte (2), on puisse déterminer, en continu et en temps réel, la surface réelle d'échange A entre le réactif (1) et la paroi de l'enceinte (2) le contenant.

2. Méthode selon la revendication 1 appliquée à la détermination de la puissance $P_t$ transmise par l'enceinte (2) **caractérisée :**

   **en ce qu'**elle consiste :

   - à mesurer le premier flux $F_1$ de chaleur par unité de surface,
   - à déterminer ladite surface d'échange A entre le réactif (1) et la paroi de l'enceinte (2),

   de telle sorte que la puissance transmise $P_t$ par l'enceinte (2) puisse être calculée, en continu et en temps réel, avec une précision et une fiabilité obtenues à partir de celles de la surface d'échange A.

3. Méthode selon la revendication 2, appliquée à la détermination du coefficient d'échange thermique U entre le réactif (1) et la paroi de l'enceinte (2) **caractérisée :**

   **en ce qu'**elle consiste :

   - à mesurer la température $T_r$ du réactif (1) et la température $T_e$ de la paroi de l'enceinte (2),
   - à déterminer la surface réelle d'échange A entre le réactif (1) et la paroi de l'enceinte (2).
   - à calculer la puissance $P_t$ transmise par l'enceinte,

   de telle sorte que le coefficient d'échange thermique U entre le réactif (1) et la paroi de l'enceinte (2) puisse être caiculé en continu et en temps réel, avec une précision et une fiabilité obtenues à partir de celles de la surface d'échange A.

4. Méthode selon la revendication 2, appliquée à la détermination de la puissance de la réaction $P_r$, **caractérisée :**

en ce qu'elle consiste à :

- à mesurer l'évolution de la température $T_r$ du réactif (1) au cours du temps de réaction,
- à déterminer la puissance transmise $P_t$ par l'enceinte (2),
- à évaluer les pertes thermiques de l'enceinte (2),

de telle sorte que la puissance de la réaction $P_r$ puisse être calculée, en continu et en temps réel, avec une précision et une fiabilité obtenues à partir de celles de la surface d'échange A.

5. Méthode selon la revendication 1, appliquée à la mesure de la variation de niveau h d'un réactif (1) à l'intérieur d'une enceinte (2), jusqu'à un seuil de sécurité.

6. Dispositif pour ia mesure de la surface d'échange A entre un réactif (1) et ia paroi d'une enceinte (2) le contenant, pour la mise en oeuvre d'une méthode selon la revendication 1, **caractérisé :**

en ce qu'il comprend :

- une enceinte (2) prévue pour recevoir le réactif (1),
- un premier capteur (4) de flux de chaleur pour mesurer le premier flux de chaleur $F_1$ par unité de surface, ce capteur (4) de flux de chaleur étant disposé sur la paroi extérieure de l'enceinte (2) en une zone de cette dernière en correspondance avec une zone de la face interne de la paroi de l'enceinte ...,
en contact certain avec le réactif (1),
- un deuxième capteur (5) de flux de chaleur pour mesurer le deuxième flux de chaleur $F_2$ par unité de surface, ce capteur (5) de flux de chaleur étant disposé sur la paroi extérieure de l'enceinte (2) en une zone de cette dernière en correspondance avec une zone de la face interne de la paroi de l'enceinte ..., en absence certaine de contact avec le réactif (1),
- un troisième capteur (6) de flux de chaleur pour mesurer le troisième flux de chaleur $F_3$ par unité de surface, ce capteur (6) de flux de chaleur étant disposé sur la paroi extérieure de l'enceinte (2) en une zone de cette dernière en correspondance avec une zone de la face interne de la paroi de l'enceinte ... à la fois en présence et en absence de contact avec le réactif (1),
- des premiers moyens (12) électroniques de calcul du niveau h du réactif (1) à partir d'informations logiques de tension fournies par les premier, deuxième et troisième capteurs de flux (4,5,6), et des deuxièmes moyens électroniques (13) de calcul de la surface réelle d'échange A entre le réactif (1) et la paroi de l'enceinte (2).

7. Dispositif selon la revendication 6 pour la mise en oeuvre d'une méthode selon l'une quelconque des revendications 1 à 4, appliquée à un calorimètre, **caractérisé :**

en ce qu'il comprend une enveloppe (3) entourant l'enceinte (2) pour la circulation d'un fluide (17) autour de cette dernière, ce fluide étant thermostaté par des moyens de production de chaleur (18), pour un maintien de l'enceinte (2) à une température souhaitée.

8. Dispositif selon la revendication 7 pour la mise en oeuvre d'une méthode selon l'une quelconque des revendications 3 et 4, **caractérisé :**

en ce qu'il comprend :

- un premier capteur de température (7) placé à l'intérieur de l'enceinte (2) pour mesurer la température $T_r$ du réactif.
- un deuxième capteur de température (8) placé à l'intérieur de l'enveloppe (3) pour mesurer la température $T_e$ de la paroi de l'enceinte (2) à partir de la température $T_f$ du fluide caloporteur thermostaté à l'intérieur de l'enveloppe (3).

9. Dispositif selon la revendication 8 pour la mise oeuvre d'une méthode selon l'une quelconque des revendications 2 et 3 **caractérisé :**

en ce qu'il comprend des troisièmes moyens (14) électroniques de calcul de la puissance $P_t$ transmise par l'enceinte (2) et des quatrièmes moyens électroniques (15) de calcul du coefficient d'échange thermique U entre le réactif (1) et la paroi de l'enceinte (2), à partir des informations logiques en provenance des deuxièmes moyens (13) électroniques de calcul, et à partir des informations logiques en provenance des premier (7) et deuxième (8) capteurs de température.

10. Dispositif selon la revendication 8 pour la mise oeuvre d'une méthode selon la revendication 4

13 **EP 1 543 304 B1** 14

**caractérisé :**

en ce qu'il comprend des cinquièmes moyens (16) électroniques de calcul de la puissance $P_r$ de la réaction thermique à partir des informations logiques en provenance des troisièmes moyens (14) électroniques de calcul et du premier capteur (7) de température.

11. Dispositif selon la revendication 6 pour la mise oeuvre d'une méthode selon la revendication 5 **caractérisé :**

en ce que les premiers (4), deuxièmes (5) et troisièmes (6) capteurs de flux de chaleur constituent des moyens généraux de détermination en continu du niveau h d'un réactif à l'intérieur de l'enceinte (2), en association avec les premiers moyens (12) de calcul.

12. Dispositif selon les revendications 6, 9 et 10 **caractérisé :**

en ce que les premiers (12), deuxièmes (13), troisièmes (14), quatrièmes (15) et cinquièmes (16) moyens de calcul électroniques sont regroupés dans des moyens généraux (9) de mémoires et calculs électroniques.

13. Dispositif selon la revendication 12 **caractérisé:**

en ce qu'il comprend un calculateur comprenant:

- des moyens généraux (9) de mémoire et de calculs électroniques,
- des moyens de visualisation des différentes informations logiques mesurées et calculées,
- des moyens de saisie d'informations et de commande des moyens généraux (9) de mémoires et de calculs électroniques.

**Claims**

1. A method for determining an exchange area A between a reagent (1) and the wall of a housing (2) containing the latter, with a view in particular to determining power $P_r$ of a thermal reaction inside the housing (2) and heat exchange coefficient U between the reagent (1) and the wall of the housing (2), **characterised:**

in that it consists:

- in measuring a first heat flux $F_1$ per unit of surface area taken in a zone of the wall in secure contact with the reagent (1),
- in measuring a second heat flux $F_2$ per unit of surface area taken in a zone of the wall in secure absence of contact with the reagent (1),
- in measuring a third heat flux $F_3$ per unit of surface area taken in a zone of the wall comprising, in a continuously overlapping manner, both any zone of the wall in secure contact with the reagent (1) next to any zone of the wall in secure absence of contact with the reagent (1),
- in calculating, by the proportion between the measurements carried out of the first, second and third heat flux, actual level h of the reagent (1) inside the housing (2),

in such a way that, on the basis of calculated actual level h of the reagent (1) and, relative to any given geometry of the housing (2), it is possible to determine continuously and in real time actual exchange area A between the reagent (1) and the wall of the housing (2) containing the latter.

2. The method according to claim 1, applied to the determination of power $P_t$ transmitted by the housing (2), **characterised:**

in that it consists:

- in measuring first heat flux $F_1$ per unit of surface area,
- in determining said exchange area A between the reagent (1) and the wall of the housing (2),

in such a way that power $P_t$ transmitted by the housing (2) can be calculated continuously and in real time with a precision and a reliability obtained from those of exchange area A.

3. The method according to claim 2, applied to the determination of heat exchange coefficient U between the reagent (1) and the wall of the housing (2), **characterised:**

in that it consists:

- in measuring temperature $T_r$ of the reagent (1) and temperature $T_e$ of the wall of the housing (2),
- in determining actual exchange area A between the reagent (1) and the wall of the housing (2),
- in calculating power $P_t$ transmitted by the housing,

in such a way that heat exchange coefficient U between the reagent (1) and the wall of the housing (2) can be calculated continuously and in real time with a precision and reliability obtained from those of exchange area A.

4. The method according to claim 2, applied to the determination of power $P_r$ of the reaction, **characterised:**

in that it consists:

- in measuring the trend in temperature $T_r$ of the reagent (1) during the reaction time,
- in determining power $P_t$ transmitted by the housing (2),
- in evaluating the heat losses of the housing (2),

in such a way that power $P_r$ of the reaction can be calculated continuously and in real time with a precision and a reliability obtained from those of exchange area A.

5. The method according to claim 1, applied to the measurement of the variation in level h of a reagent (1) inside a housing (2), up to a safety threshold.

6. A device for measuring exchange area A between a reagent (1) and the wall of a housing (2) containing the latter, in order to implement a method according to claim 1, **characterised:**

in that it comprises:

- the housing (2) provided to receive the reagent (1),
- a first heat flux sensor (4) for measuring first heat flux $F_1$ per unit of surface area, this heat flux sensor (4) being disposed on the outer wall of the housing (2) in a zone of the latter corresponding to a zone of the inner face of the wall of the housing in secure contact with the reagent (1),
- a second heat flux sensor (5) for measuring second heat flux $F_2$ per unit of surface area, this heat flux sensor (5) being disposed on the outer wall of the housing (2) in a zone of the latter corresponding to a zone of the inner face of the wall of the housing in secure absence of contact with the reagent (1),
- a third heat flux sensor (6) for measuring third heat flux $F_3$ per unit of surface area, this heat flux sensor (6) being disposed on the outer wall of the housing (2) in a zone of the latter corresponding to a zone of the inner face of the wall of the housing both in the presence of and in the absence of contact with the reagent (1),
- first electronic means (12) for calculating level h of the reagent (1) on the basis of logical voltage data supplied by the first, second and third flux sensors (4, 5, 6), and second electronic means (13) for calculating actual exchange area A between the reagent (1) and the wall of the housing (2).

7. The device according to claim 6 for implementing a method according to any one of claims 1 to 4, applied to a calorimeter, **characterised:**

in that it comprises a jacket (3) surrounding the housing (2) for the circulation of a fluid (17) around the latter, this fluid being thermostatted by heat-producing means (18) in order to maintain the housing (2) at a desired temperature.

8. The device according to claim 7 for implementing a method according to any one of claims 3 and 4, **characterised:**

in that it comprises:

- a first temperature sensor (7) placed inside the housing (2) to measure temperature $T_r$ of the reagent,
- a second temperature sensor (8) placed inside the jacket (3) to measure temperature $T_e$ of the wall of the housing (2) on the basis of temperature $T_f$ of the thermostatted heat-transfer fluid inside the jacket (3).

9. The device according to claim 8 for implementing a method according to any one of claims 2 and 3, **characterised:**

in that it comprises third electronic means (14) for calculating power $P_t$ transmitted by the housing (2) and fourth electronic means (15) for calculating heat exchange coefficient U between the reagent (1) and the wall of the housing (2) on the basis of logical data provided by second electronic calculation means (13), and on the basis of logical data provided by first (7) and second (8) temperature sensors.

10. The device according to claim 8 for implementing a method according to claim 4, **characterised:**

in that it comprises fifth electronic means (14) for calculating power $P_r$ of the thermal reaction on the basis of logical data provided by third electronic calculation means (14) and from first temperature sensor (7).

**11.** The device according to claim 6 for implementing a method according to claim 5, **characterised:**

> **in that** the first (4), second (5) and third (6) heat flux sensors constitute general means for the continuous determination of level h of a reagent inside the housing (2), in association with first calculation means (12).

**12.** The device according to claims 6, 9 and 10, **characterised:**

> **in that** the first (12), second (13), third (14), fourth (15) and fifth (16) electronic calculation means are grouped in general memory and electronic calculation means (9).

**13.** The device according to claim 12, **characterised:**

> **in that** it comprises a calculator comprising:
>
> - general memory and electronic calculation means (9),
> - means of displaying various measured and calculated logical data,
> - means for acquiring data and for controlling general memory and electronic calculation means (9).

**Patentansprüche**

**1.** Verfahren zur Bestimmung einer Austauschfläche A zwischen einem Reagenz (1) und der Wand eines Hohlraums (2), der dieses enthält, um insbesondere die Leistung $P_r$ einer thermischen Reaktion im Inneren des Hohlraums (2) und den Wärmeaustauschkoeffizienten U zwischen dem Reagenz (1) und der Wand des Hohlraums (2) zu bestimmen, **dadurch gekennzeichnet:**

> **dass** es darin besteht:
>
> - einen ersten Wärmefluss $F_1$ pro Flächeneinheit zu messen, wobei dies in einem Bereich der Wand erfolgt, der sich in sicherem Kontakt mit dem Reagenz (1) befindet,
> - einen zweiten Wärmefluss $F_2$ pro Flächeneinheit zu messen, wobei dies in einem Bereich der Wand erfolgt, der sich nicht in sicherem Kontakt mit dem Reagenz (1) befindet,
> - einen dritten Wärmefluss $F_3$ pro Flächeneinheit zu messen, wobei dies in einem Bereich der Wand erfolgt, der in kontinuierlich überlappender Weise sowohl einen beliebigen Bereich der Wand, der sich in sicherem Kontakt mit dem Reagenz (1) befindet und

> einen benachbarten beliebigen Bereich, der sich nicht in sicherem Kontakt mit dem Reagenz (1) befindet, umfasst,
> - durch proportionale Berechnung aus den Messungen der ersten, zweiten und dritten Wärmefluss das tatsächliche Niveau h des Reagenzes (1) im Inneren des Hohlraums (2) zu bestimmen,

> sodass, ausgehend vom berechneten tatsächlichen Niveau h des Reagenz (1) und im Verhältnis zu einer beliebigen gegebenen Geometrie des Hohlraums (2), kontinuierlich und in Echtzeit die tatsächliche Austauschfläche A zwischen dem Reagenz (1) und der Wand des Hohlraums (2), der dieses enthält, bestimmt werden kann.

**2.** Verfahren nach Anspruch 1, angewendet auf die Bestimmung der Leistung $P_t$, welche von dem Hohlraum (2) übertragen wird, **dadurch gekennzeichnet:**

> **dass** es darin besteht:
>
> - den ersten Wärmefluss $F_1$ pro Flächeneinheit zu messen,
> - die Austauschfläche A zwischen dem Reagenz (1) und der Wand des Hohlraums (2) zu messen,

> sodass die Leistung $P_t$, die von dem Hohlraum (2) übertragen wird, kontinuierlich und in Echtzeit berechnet werden kann, mit einer Genauigkeit und einer Zuverlässigkeit, die ausgehend von denjenigen der Austauschfläche A erhalten werden.

**3.** Verfahren nach Anspruch 2, angewendet auf die Bestimmung des Wärmeaustauschkoeffizienten U zwischen dem Reagenz (1) und der Wand des Hohlraums (2), **dadurch gekennzeichnet:**

> **dass** es darin besteht:
>
> - die Temperatur $T_r$ des Reagenzes (1) und die Temperatur $T_e$ der Wand des Hohlraums (2) zu messen,
> - die tatsächliche Austauschfläche A zwischen dem Reagenz (1) und der Wand des Hohlraums (2) zu messen,
> - Die Leistung $P_t$, die von dem Hohlraum übertragen wird, zu berechnen,

> sodass der Wärmeaustauschkoeffizient U zwischen dem Reagenz (1) und der Wand (1) des Hohlraums (2), kontinuierlich und in Echtzeit berechnet werden kann, mit einer Genauigkeit und

**4.** Verfahren nach Anspruch 2, angewendet auf die Bestimmung der Leistung der Reaktion $P_r$, **dadurch gekennzeichnet:**

dass es darin besteht:

- die Entwicklung der Temperatur $T_r$ des Reagenzes (1) im Laufe der Reaktionszeit zu messen,
- die Leistung $P_t$, die von dem Hohlraum (2) übertragen wird, zu bestimmen,
- die Wärmeverluste des Hohlraums (2) auszuwerten,

sodass die Leistung der Reaktion $P_r$, kontinuierlich und in Echtzeit berechnet werden kann, mit einer Genauigkeit und einer Zuverlässigkeit, die ausgehend von denjenigen der Austauschfläche A erhalten werden.

**5.** Verfahren nach Anspruch 1, angewendet auf die Messung der Veränderungen des Niveau h eines Reagenzes (1) im Inneren eines Hohlraums (2), bis zu einem Sicherheitsschwellenwert.

**6.** Vorrichtung zur Messung der Austauschfläche A zwischen einem Reagenz (1) und der Wand eines Hohlraums (2), der dieses enthält, für die Durchführung eines Verfahrens nach Anspruch 1, **dadurch gekennzeichnet:**

dass sie folgendes umfasst:

- einen Hohlraum (2) zur Aufnahme des Reagenzes (1),
- einen ersten Wärmefluss-Sensor (4) zur Messung des ersten Wärmeflusses $F_1$ pro Flächeneinheit, wobei dieser Wärmefluss-Sensor (4) auf der Außenwand des Hohlraums (2) in einem Bereich des letzteren angeordnet ist, der mit einem Bereich der Innenseite der Wand des Hohlraums in Verbindung steht, welcher sich in sicherem Kontakt mit dem Reagenz (1) befindet,
- einen zweiten Wärmefluss-Sensor (5) zur Messung des zweiten Wärmeflusses $F_2$ pro Flächeneinheit, wobei dieser Wärmefluss-Sensor (5) auf der Außenwand des Hohlraums (2) in einem Bereich des letzteren angeordnet ist, der mit einem Bereich der Innenseite der Wand des Hohlraums in Verbindung steht, welcher sich nicht in sicherem Kontakt mit dem Reagenz (1) befindet,
- einen dritten Wärmefluss-Sensor (6) zur Messung des dritten Wärmeflusses $F_3$ pro

Flächeneinheit, wobei dieser Wärmefluss-Sensor (6) auf der Außenwand des Hohlraums (2) in einem Bereich des letzteren angeordnet ist, der mit einem Bereich der Innenseite der Wand des Hohlraums in Verbindung steht, welcher sich sowohl in Kontakt als auch nicht in Kontakt mit dem Reagenz (1) befindet,
- erste elektronische Mittel (12) zum Berechnen des Niveaus h des Reagenzes (1) ausgehend von logischen Spannungsinformationen, die von den ersten, zweiten und dritten Fluss-Sensoren (4, 5, 6) geliefert werden, und zweite elektronische Mittel (13) zum Berechnen der tatsächlichen Austauschfläche A zwischen dem Reagenz (1) und der Wand des Hohlraums (2).

**7.** Vorrichtung nach Anspruch 6 zur Durchführung eines Verfahrens nach einem beliebigen der Ansprüche 1 bis 4, angewendet auf ein Kalorimeter, **dadurch gekennzeichnet:**

dass sie einen Mantel (3) umfasst, der den Hohlraum (2) umgibt und dazu bestimmt ist, letzteren von einem Fluid (17) umströmen zu lassen, wobei dieses Fluid durch Mittel zur Wärmeerzeugung (18) thermostatisiert ist, um den Hohlraum (2) bei einer gewünschten Temperatur zu halten.

**8.** Vorrichtung nach Anspruch 7 zur Durchführung eines Verfahrens nach einem beliebigen der Ansprüche 3 und 4,
**dadurch gekennzeichnet:**

dass sie folgendes umfasst:

- einen ersten Temperatursensor (7), der im Inneren des Hohlraums (2) angeordnet ist, um die Temperatur $T_r$ des Reagenzes zu messen,
- einen zweiten Temperatursensor (8), der im Inneren des Mantels (3) angeordnet ist, um die Temperatur $T_e$ der Wand des Hohlraums (2) ausgehend von der Temperatur $T_f$ des thermostatisierten Wärmeträgerfluids im Inneren des Mantels (3) zu messen.

**9.** Vorrichtung nach Anspruch 8 zur Durchführung eines Verfahrens nach einem beliebigen der Ansprüche 2 und 3, **dadurch gekennzeichnet:**

dass sie dritte elektronische Mittel (14) zur Berechnung der Leistung $P_t$, die von dem Hohlraum (2) übertragen wird, und vierte elektronische Mittel (15) zur Berechnung des Wärmeaustauschkoeffizienten U zwischen dem Reagenz (1) und der Wand des Hohlraums (2), ausgehend von den logischen Informationen, die von den zweiten elektronischen Berechnungsmitteln (13) stammen, und ausgehend von den logischen Informationen, die von den ersten (7) und zweiten (8) Temperatursensoren stammen, umfasst.

**10.** Vorrichtung nach Anspruch 8 zur Durchführung eines Verfahrens nach Anspruch 4, **dadurch gekennzeichnet:**

   **dass** sie fünfte elektronische Mittel (16) zur Berechnung der Leistung $P_r$ der thermischen Reaktion ausgehend von den logischen Informationen, die von den dritten elektronischen Berechnungsmitteln (14) und vom ersten Temperatursensor (7) stammen, umfasst.

**11.** Vorrichtung nach Anspruch 6 zur Durchführung eines Verfahrens nach Anspruch 5, **dadurch gekennzeichnet:**

   **dass** die ersten (4), zweiten (5) und dritten (6) Wärmefluss-Sensoren allgemeine Mittel zur kontinuierlichen Bestimmung des Niveaus h eines Reagenzes im Inneren eines Hohlraums (2), in Verbindung mit den ersten Berechnungsmitteln (12) darstellen.

**12.** Vorrichtung nach den Ansprüchen 6, 9 und 10, **dadurch gekennzeichnet**
**dass** die ersten (12), zweiten (13), dritten (14), vierten (15) und fünften (16) elektronischen Berechnungsmittel in allgemeinen elektronischen Speicher- und Berechnungsmitteln (9) zusammengefasst sind.

**13.** Vorrichtung nach Anspruch 12, **dadurch gekennzeichnet:**

   **dass** sie ein Steuergerät umfasst, das folgendes umfasst:

      - allgemeine elektronischen Speicher- und Berechnungsmittel (9),
      - Mittel zur Anzeige der verschiedenen gemessenen und berechneten logischen Informationen,
      - Mittel zur Informationseingabe und zur Steuerung der allgemeinen elektronischen Speicher- und Berechnungsmittel (9).

figure

EP 1 543 304 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4130016 A, LYNN C. WALKER
- EP 0275042 A
- US 5174655 A